(19) Europäisches Patentamt
European Patent Office
Office européen des brevets

(11) **EP 3 712 607 B1**

(12) **EUROPÄISCHE PATENTSCHRIFT**

(45) Veröffentlichungstag und Bekanntmachung des Hinweises auf die Patenterteilung:
**12.05.2021 Patentblatt 2021/19**

(51) Int Cl.:
**G01N 29/24** *(2006.01)* **B06B 1/06** *(2006.01)*
**G01N 29/28** *(2006.01)* **G10K 11/02** *(2006.01)*

(21) Anmeldenummer: **19164629.8**

(22) Anmeldetag: **22.03.2019**

(54) **ULTRASCHALLWANDLER MIT EINER STRUKTURIERTEN ANKOPPELSCHICHT**

ULTRASONIC TRANSDUCER WITH A STRUCTURED COUPLING LAYER

TRANSDUCTEUR ULTRASONORE DOTÉ D'UNE COUCHE DE COUPLAGE STRUCTURÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.09.2020 Patentblatt 2020/39**

(73) Patentinhaber: **Sonotec Ultraschallsensorik GmbH**
**06112 Halle (Saale) (DE)**

(72) Erfinder:
• **KRAUSE, Werner**
**06114 Halle (Saale) (DE)**
• **WAHLER, Martin**
**06188 Landsberg OT Niemberg (DE)**

(74) Vertreter: **Maikowski & Ninnemann**
**Patentanwälte Partnerschaft mbB**
**Postfach 15 09 20**
**10671 Berlin (DE)**

(56) Entgegenhaltungen:
**WO-A1-94/05004    FR-A1- 2 546 306**

## Beschreibung

### Gebiet der Erfindung

Die Erfindung betrifft einen Ultraschallwandler aufweisend ein Piezoelement und eine Ankoppelschicht. Die Ankoppelschicht ist auf der schallabgebenden Seite des Piezoelementes angebracht und weist eine Strukturierung auf, welche durch Aussparungen gebildet wird. Die Erfindung betrifft weiterhin ein Verfahren zur Reduzierung von Nebenschwingungen des Ultraschallsignals des erfindungsgemäßen Ultraschallwandlers sowie die Verwendung des erfindungsgemäßen Ultraschallwandlers in der zerstörungsfreien, insbesondere kontaktlosen Materialprüfung.

### Stand der Technik

Ultraschall wird regelmäßig in der Materialprüfung eingesetzt. Luftultraschall stellt dabei ein spezielles Prüfverfahren dar, bei dem als Koppelmedium Luft verwendet wird. Der Ultraschallwandler ist dabei nicht in Kontakt mit dem Prüfmaterial, wodurch eine berührungslose, zerstörungsfreie Prüfung von Bauteilen oder Werkstoffen möglich ist.

Eine Herausforderung in der Luftultraschallprüfung ist die Verwendung von Luft als Koppelmedium, da sich die Abstrahlung von Ultraschall in Luft durch eine schlechte akustische Ankopplung auszeichnet. Die akustische Anpassung beschreibt die unterschiedliche Impedanz zwischen dem festen Wandlermedium und dem Ausbreitungsmedium Luft.

Klassische Luftultraschallwandler arbeiten meist im Radialresonanzbetrieb, das heißt, es wird die Radialschwingung des Piezoelementes ausgenutzt. Diese Ultraschallwandler zeichnen sich vor allem durch ein schmalbandiges Signal aus, wobei die Arbeitsfrequenz des Ultraschallwandlers direkt vom Radius des Piezoelementes abhängt. Durch die unterschiedliche Impedanz von Wandlermedium und Luft entsteht ein charakteristisches Ultraschallsignal, das sich durch verschiedene Schwingungsmoden auszeichnet. Aufgrund der schlechten Bedämpfbarkeit der Radialschwingungen von Piezoelementen, gibt es derzeit kein Verfahren mit dem die relative Bandbreite eines solchen Ultraschallwandlers signifikant erhöht werden kann.

Um die schlechte akustische Anpassung an das Medium Luft zu verbessern, ist aus dem Stand der Technik die Verwendung von λ/4-Ankoppelschichten bekannt. Diese gleichen den Impedanzunterschied zwischen Wandlermedium und Luft an und verbessern damit die akustische Ankopplung des Ultraschallsignals. Die Ankopplungsschicht wird fest mit der Oberfläche des Piezoelementes verbunden und zeichnet sich durch eine zur Oberfläche des Piezoelementes parallele Oberfläche aus.

Neben der Radialschwingung ist es auch möglich Ultraschall auf Grundlage der Dickenschwingung eines Piezoelementes zu erzeugen, dabei kommt es jedoch auch zur Ausbildung von Querschwingungen. Durch die starre Verbindung des Piezoelementes und der λ/4-Ankoppelschicht führen die Querschwingungen zur Ausbildung von unerwünschten Nebenschwingungen im Ultraschallsignal. Die durch die Querschwingungen verursachten Nebenschwingungen verlängern den Ultraschallpuls der vom Ultraschallwandler abgegeben wird und verringern dadurch die realtive Bandbreite des Ultraschallsignals.

Für die Anwendung in der Materialprüfung ist jedoch in vielen Fällen ein breitbandiges Ultraschallsignal wünschenswert oder gar notwendig. Beispielsweise wird Luftultraschall in der Prüfung von Kompositverklebungen eingesetzt. Hier können eine Vielzahl unterschiedlicher Fehler, wie beispielsweise Lufteinschlüsse, Delaminationen, Klebefehler, Verunreinigungen, Kanäle, Risse und/oder Kissing Bonds auftreten. Durch die große Vielzahl an auftretenden Fehlern sind die Anforderungen an die Messaufgabe sehr vielfältig. Aufgrund der unterschiedlichen lateralen und axialen Ausdehnung der Fehler sowie unterschiedlichem Dämpfungsverhalten ist es notwendig, so breitbandig wie nur möglich zu messen. Aktuelle Luftultraschallprüfköpfe sind wie eingangs bereits beschrieben schmalbandig ausgeführt. Relative Bandbreiten, wie sie in der Tauchtechnik oder Kontakttechnikmessung umgesetzt werden, sind im Bereich der Luftultraschallprüfung aktuell nicht einsetzbar. Während bei Kontakt- bzw. Tauchtechnikmessungen relative Bandbreiten von 80-100% gängig sind, wird in der Luftultraschallprüfung derzeit mit relativen Bandbreiten von ca. 10% gearbeitet. Die relative Bandbreite $\Delta f_{re1}$ ergibt sich aus dem Verhältnis der Differenz der oberen Grenzfrequenz $f_u$ und der unteren Grenzfrequenz $f_1$ zur Mittenfrequenz $f_0$ des Ultraschallpulses und wird wie folgt berechnet:

$$\Delta f_{rel} = [(f_u - f_l)/f_0] * 100\%$$

Um die beschriebenen Fehler sicher erfassen zu können, reichen die momentan im Luftultraschall erreichbaren relativen Bandbreiten jedoch nicht aus. Um die Vielzahl der möglichen Fehler detektieren zu können, ist es notwendig, die Probe bzw. den Prüfling mit mehreren Frequenzen zu untersuchen. Der dadurch entstehende Mehraufwand ist erheblich und führt oftmals zum Verwerfen des Prüfverfahrens.

Anwender müssen dann die mit Tauch- und Kontakttechnik verbundenen Nachteile der Kontamination des Prüflings mit Koppelmittel in Kauf nehmen oder verzichten auf die aufwendige Flächenprüfung mit Ultraschall.

Aus dem Stand der Technik sind zwar bereits Ultraschallwandler bekannt, die Aussparungen in der Ankoppelschicht aufweisen, jedoch mit dem Ziel eine möglichst optimale akustische Anpassung an das Medium Luft zu erreichen. Deren Lehren können daher aus den im Folgenden aufgeführten Gründen nicht für die Lösung der Aufgabe der vorliegenden Erfindung dienen.

Die WO 94/05004 offenbart einen Ultraschallwandler, der hinsichtlich der akustischen Anpassung an das Medium Luft optimiert wurde. Hierfür wird eine λ/4-Ankoppelschicht verwendet, die Einschnitte an Ihrer Rückseite aufweist, wobei diese Einschnitte bevorzugt konzentrische, ringförmige Rillen sind, die maximal eine Eindringtiefe von einem Viertel der Ankoppelschicht aufweisen. Gegenstand der WO 94/05004 ist es nicht Querschwingungen des Piezoelementes zu unterdrücken, um störende Nebenschwingungen im Ultraschallsignal zu reduzieren, sondern lediglich eine akustische Anpassung zum umgebenden Medium Luft vorzunehmen. Es hat sich gezeigt, dass eine Unterdrückung der Querschwingungen des Piezoelementes nur gewährleistet werden kann, wenn mindestens eine Aussparung in der Ankoppelschicht durchgängig durch die Oberfläche der Ankoppelschicht verläuft. Eine solche Ausführungsform ist in der WO 94/05004 nicht beschrieben, weswegen diese nicht dafür geeignet ist Querschwingungen eines Piezoelementes zu unterdrücken und damit keine Lösung für die Aufgabe der vorliegenden Erfindung bietet.

Die Patentanmeldung FR 2 546 306 A1 offenbart ebenfalls einen Ultraschallwandler, der hinsichtlich der akustischen Anpassung an das Medium Luft optimiert wurde. Hierfür wurden in die Ankoppelschicht Aussparungen eingebracht, die äquidistant zueinander sind und beispielsweise rechteckige, rautenförmige oder quadratische Abschnitte bilden. In jedem Fall bilden die Aussparungen zueinander symmetrische Abschnitte aus. Diese Symmetrie ist ein zentraler Punkt der Wirkungsweise des in der FR 2 546 306 A1 beschriebenen Ultraschallwandlers. Es hat sich jedoch überraschenderweise gezeigt, dass Aussparungen, die zueinander unsymmetrisch Elemente und/oder Bereiche im Sinn der vorliegenden Erfindung bilden, besonders geeignet sind, um die Querschwingungen des Piezoelementes zu unterdrücken. Die Lehre der FR 2 546 306 A1 kann damit ebenfalls nicht zur Lösung der Aufgabe der vorliegenden Erfindung dienen.

**Beschreibung der Erfindung**

Die Aufgabe der Erfindung besteht darin, die Nachteile des Standes der Technik zu überwinden und einen Ultraschallwandler zur Verfügung zu stellen, der speziell an die Luftultraschallprüfung angepasst ist und eine hohe relative Bandbreite aufweist. Aufgrund der hohen relativen Bandbreite ist der erfindungsgemäße Ultraschallwandler für vielfältige Anwendungen in der Materialprüfung geeignet.

Die Aufgabe der Erfindung wird gelöst durch einen Ultraschallwandler nach Anspruch 1, der ein Dämpfungselement, ein Piezoelement und eine Ankoppelschicht aufweist. Die Ankoppelschicht ist auf der schallabgebenden Seite des Piezoelementes angebracht und weist eine Strukturierung auf. Die Strukturierung wird durch ein oder mehrere Aussparungen in der Ankoppelschicht ausgebildet, wobei mindestens eine Aussparung, die eine Strukturierung bildet, durchgängig durch die Oberfläche der Ankoppelschicht verläuft. Die Strukturierung kann erfindungsgemäß auf der Vorderseite und/oder auf der Rückseite der Ankoppelschicht eingebracht sein, wobei die Strukturierung eine vordefinierte Eindringtiefe in die Ankoppelschicht aufweist und/oder die Ankoppelschicht vollständig durchtrennt. Die Ankoppelschicht wird durch die Strukturierung in mehrere Bereiche und/oder Elemente geteilt, wobei die Bereiche und/oder Elemente der Ankoppelschicht, die durch die Strukturierung gebildet werden, keine Symmetrie zueinander aufweisen.

Die Erfindung betrifft weiterhin ein Verfahren zur Reduzierung vo Nebenschwingungen des Ultraschallsignals des erfindungsgemäßen Ultraschallwandlers. Dabei wird die Dickenschwingung des Piezoelementes verfahrensgemäß durch ein Burstsignal angeregt und die Strukturierung der Ankoppelschicht verhindert Nachschwingungen des Piezoelementes in Form von Querschwingungen wodurch Nebenschwingungen des Ultraschallsignals reduziert werden.

Weiterhin betrifft die Erfindung die Verwendung des Ultraschallwandlers in der zerstörungsfreien, insbesondere kontaktlosen Materialprüfung.

**Detaillierte Beschreibung der Erfindung**

Der erfindungsgemäße Ultraschallwandler weist, ein Dämpfungselement, ein Piezoelement und eine Ankoppelschicht auf. Erfindungsgemäß wird auf der schallabgebenden Seite des Piezoelementes eine Ankoppelschicht angebracht. Die Ankoppelschicht dient der akustischen Anpassung an das Medium Luft und wird bevorzugt als λ/4-Schicht oder als ein Vielfaches einer λ/4-Schicht ausgeführt. Dabei ist λ die Wellenlänge der Dickenschwingung des Piezoelementes und die Dicke d der Ankoppelschicht beträgt $d = n * \frac{\lambda}{4} \ (n \in \mathbb{N})$, womit die Dicke d der Ankoppelschicht auf die Frequenz der Dickenschwingung abgestimmt ist.

In einer Ausführungsform der Erfindung ist die Ankoppelschicht eine λ/4-Schicht oder ein Vielfaches davon.

Die Ankoppelschicht ist auf der schallabgebenden Seite des Piezoelementes angebracht, wobei die Oberfläche der Ankoppelschicht, die mit dem Piezoelement verbunden ist, im Folgenden als die Rückseite der Ankoppelschicht bezeichnet wird und die Oberfläche der Ankoppelschicht, die mit dem umgebenden Medium (Luft) in Berührung steht, im Folgenden als Vorderseite der Ankoppelschicht bezeichnet wird. Die Ankoppelschicht weist des Weiteren eine Strukturierung auf, wobei die Strukturierung durch ein oder mehrere Aussparungen in der Ankoppelschicht ausgebildet wird.

Die Aussparungen in der Ankoppelschicht sind so ausgeführt, dass die Vorderseite der Ankoppelschicht parallel zur Oberfläche des Piezoelementes verläuft. Durch diese Maßnahme wird eine optimale akustische Ankopplung zum umgebenden Medium Luft gewährleistet. Die erfindungsgemäße Ankoppelschicht weist mindestens eine Aussparung auf, die durchgängig durch die Oberfläche der Ankoppelschicht verläuft. Das bedeutet, dass diese mindestens eine Aussparung an einem Rand der Ankoppelschicht beginnt und endet, wobei diese mindestens eine Aussparung durchgängig, das heißt ohne Unterbrechung, ausgebildet ist. Erfindungsgemäß können auch mehrere Aussparungen in der Ankoppelschicht, die die Strukturierung bilden, durchgängig durch die Oberfläche der Ankoppelschicht ausgebildet sein. In einer bevorzugten Ausführungsform der Erfindung verlaufen alle Aussparungen in der Ankoppelschicht durchgängig durch die Oberfläche der Ankoppelschicht.

In einer weiteren Ausführungsform der Erfindung verläuft genaue eine Aussparung durchgängig durch die Ankoppelschicht und alle weiteren Aussparungen, die ebenfalls die Strukturierung bilden, verlaufen nicht durchgängig durch die Oberfläche der Ankoppelschicht.

Querschwingungen des Piezoelementes verursachen in Luftultraschallwandlern die aus dem Stand der Technik bekannt sind störende Nebenschwingungen, die damit den Ultraschallpuls des Ultraschallwandlers unerwünscht verlängern und somit die relative Bandbreite reduzieren. Überraschenderweise hat sich gezeigt, dass eine Ankoppelschicht, die mindestens eine durchgängige Aussparung aufweist besonders gut dafür geeignet ist, Querschwingungen des Piezoelementes zu unterdrücken. Dadurch wird die Amplitude von unerwünschten Nebenschwingungen reduziert, womit die Länge des abgegebenen Ultraschallpulses verkürzt werden kann und damit dessen relative Bandbreite größer wird.

Die Aussparungen in der Ankoppelschicht können nur auf der Vorderseite der Ankoppelschicht oder nur auf der Rückseite der Ankoppelschicht ausgebildet sein. Erfindungsgemäß ist es auch möglich, dass sowohl die Vorder- als auch die Rückseite der Ankoppelschicht Aussparungen aufweisen.

Die Ausführung der Aussparungen nur an der Vorder- oder an der Rückseite der Ankoppelschicht oder aber an beiden Seiten der Ankoppelschicht stellen, hinsichtlich Ihrer Effektivität Querschwingungen des Piezoelemente zu unterdrücken, gleichwertige Lösungen dar. Ausführungsformen, bei denen die Aussparungen nur an der Vorder- oder an der Rückseite der Ankoppelschicht ausgebildet werden, bieten lediglich einen Vorteil bei der Herstellung der Ankoppelschicht, da die Einarbeitung der Aussparungen nur auf einer Seite der Ankoppelschicht eine geringere Anforderung an die Bearbeitungstechnologie stellt.

Die Aussparungen, die auf der Vorder- und/oder Rückseite der Ankoppelschicht eingebracht sind, können eine vordefinierte Eindringtiefe aufweisen und/oder die Ankoppelschicht vollständig durchtrennen. Die Ankoppelschicht wird durchtrennt, wenn eine Aussparung auf der Vorderseite beginnt und bis zur Rückseite der Ankoppelschicht ausgebildet ist oder auf der Rückseite beginnt und entsprechend bis zur Vorderseite der Ankoppelschicht ausgebildet ist. Weist eine Aussparung eine vordefinierte Eindringtiefe auf, so ist diese vorzugsweise für die jeweilige Aussparung konstant.

In einer weiteren Ausführungsform der Erfindung ist die Eindringtiefe für eine Aussparung nicht konstant sondern variiert.

In einer Ausführungsform der Erfindung weisen alle Aussparung eine vordefinierte Eindringtiefe auf und keine der Aussparung durchtrennt die Ankoppelschicht. In einer anderen Ausführungsform durchtrennen alle Aussparungen die Ankoppelschicht vollständig. In einer weiteren Ausführungsform der Erfindung weist die Ankoppelschicht Aussparungen mit einer definierten Eindringtiefe auf und Aussparungen die die Ankoppelschicht vollständig durchtrennen.

Weist der erfindungsgemäße Ultraschallwandler mehrere Aussparungen einer vordefinierten Eindringtiefe auf, so können sich diese erfindungsgemäß unterschiedlich tief in die Ankoppelschicht erstrecken. Das heißt, die einzelnen Aussparungen können unterschiedliche Eindringtiefen aufweisen. In einer Ausführungsform der Erfindung weist der Ultraschallwandler daher mehrere Aussparungen der Strukturierung an der Vorder- und/oder Rückseite der Ankoppelschicht auf, die sich unterschiedlich tief in die Ankoppelschicht erstrecken.

Die Ankoppelschicht wird durch die Strukturierung in mehrere Bereiche und/oder Elemente geteilt. Dabei werden in der Ankoppelschicht ein oder mehrere Bereiche zwischen den Aussparungen oder zwischen der Aussparung und dem Rand der Ankoppelschicht gebildet, wenn die Aussparung bzw. die Aussparungen eine bestimmt Eindringtiefe aufweisen. Durchtrennen die Aussparungen die Ankoppelschicht hingegen vollständig, so entstehen einzelne Elemente der Ankoppelschicht.

Die Bereiche und/oder Elemente der Ankoppelschicht, die durch die Strukturierung gebildet werden, weisen keine Symmetrie zueinander auf.

Gemäß der vorliegenden Erfindung weisen die Bereiche und/oder Elemente der Ankoppelschicht, die durch di Strukturierung gebildet werden, keinerlei Symmetrie zueinander auf.

Überraschenderweise hat sich gezeigt, dass gerade eine unsymmetrische Anordnung der Bereiche und/oder Elemente die durch die Aussparungen in der Ankoppelschicht gebildet werden, eine besonders effiziente Unterdrückung der Ausbildung von unerwünschten Nebenschwingungen aufgrund der Querschwingungen des Piezoelementes bewirkt. Dadurch kann im erfindungsgemäßen Ultraschallwandler die Querschwingung des Piezoelementes weitgehend unterdrückt werden. Der erfindungsgemäße Ultraschallwandler ist daher vorteilhafterweise in der Lage einen Ultraschallpuls mit in Ihrer Amplitude deutlich reduzierten Nebenechos auszusenden, womit wiederum der Ultraschallpuls insgesamt verkürzt wird und somit eine größere relative Bandbreite zur Verfügung steht.

Die Aussparungen, die die Strukturierung bilden, können unterschiedliche Formen aufweisen. Beispielsweise können die Aussparungen linear ausgebildet sein. In diesem Fall verlaufen die Aussparungen in der Ankoppelschicht linear, wenn die Oberfläche der Ankoppelschicht auf der sich die Struktur befindet von oben betrachtet wird. In einer bevorzugten Ausführungsform der Erfindung wird die Strukturierung der Ankoppelschicht durch ein oder mehrere lineare Aussparungen gebildet.

In einer Ausführungsform der Erfindung wird die Strukturierung durch eine oder mehrere gekrümmte Aussparungen gebildet. In diesem Fall verlaufen die Aussparungen in der Ankoppelschicht gekrümmt, wenn die Oberfläche der Ankoppelschicht auf der sich die Struktur befindet von oben betrachtet wird.

In einer weiteren Ausführungsform der Erfindung weist die Ankoppelschicht mehrere Aussparungen mit unterschiedlicher Form auf. Insbesondere kann die Strukturierung der Ankoppelschicht in einer Ausführungsform durch eine Kombination von linear und gekrümmt verlaufenden Aussparungen gebildet sein.

Alle Aussparungen, die die Strukturierung der Ankoppelschicht bilden, verlaufen senkrecht zur Oberfläche des Piezoelementes. Das heißt die Elemente und/oder Bereiche der Ankoppelschicht, die durch die Strukturierung gebildet werden, stehen senkrecht auf der Oberfläche des Piezoelementes. Diese Ausgestaltung gewährleistet eine effiziente akustische Anpassung an das Medium Luft durch die erfindungsgemäße Ankoppelschicht.

Die Aussparungen in der Ankoppelschicht sind in einer Ausführungsform der Erfindung mit Luft gefüllt.

In einer weiteren Ausführungsform der Erfindung sind die Aussparungen in der Ankoppelschicht mit einem Füllmaterial wie beispielsweise einem Kunststoff oder einem Harz gefüllt. Geeignete Kunststoffe sind Kunststoffe ausgewählt aus der Gruppe aufweisend NBR (Copolymer aus Butadien und Acrylnitril), Silikon, PUR (Polyurethan). Geeignete Harze sind Harze ausgewählt aus der Gruppe der Epoxydharze. In einer besonders bevorzugten Ausführungsform der Erfindung wird NBR als Füllmaterial verwendet.

Eine optimale akustische Anpassung zwischen Wandlermedium und dem umgebendem Medium Luft wird erreicht, wenn die Ankoppelschicht eine akustische Impedanz aufweist, die das geometrischen Mittel der akustischen Impedanz von Wandlermedium und akustischer Impedanz von Luft ist. Da es ein solches Material praktisch nicht gibt, wird ein Material für die Ankoppelschicht verwendet, dass eine möglichst geringe Dichte hat und noch mechanisch bearbeitbar ist. Die Ankoppelschicht weist daher bevorzugt ein Material mit einer Dichte geringer als 1 g/cm$^3$, besonders bevorzugt geringer

als 0,4 g/cm$^3$ auf.

Die Ankoppelschicht weist erfindungsgemäß ein Material aus der Gruppe enthaltend Schäume, besonders bevorzugt syntaktische Schäume auf. Syntaktische Schäume sind Verbundwerkstoffe, bei denen in einen Schaum beispielsweise aus Polyethylen oder Epoxydharz Mikrohohlkugeln aus Glas oder Keramik eingeschlossen sind.

Die Ankoppelschicht ist mit der Oberfläche des Piezoelementes vorzugsweise verklebt. Die Verklebung kann dabei punktuell, teilweise flächig oder auch vollflächig vorgenommen werden. Bevorzugt ist eine vollflächige Verklebung der Ankoppelschicht mit der Oberfläche des Piezoelementes. Geeignete Kleber sind ausgewählt aus der Gruppe enthaltend Epoxidharz, PUR (Polyurethan), Cyanoacrylate und Strukturklebstoffe, wobei eine Verklebung mit Epoxidharz besonders bevorzugt ist.

In dem erfindungsgemäßen Ultraschallwandler kann ein Piezokomposit oder eine Piezokeramik als Piezoelement verwendet werden.

In einer Ausführungsform der Erfindung weist das Piezoelement eine Piezokeramik ausgewählt aus der Gruppe enthaltend PZT (Bleizirkonattitanat), PMN (Bleimetaniobat) und BTO (Bariumtitanat) auf.

In einer weiteren Ausführungsform der Erfindung weist das Piezoelement einen Piezokomposit, bevorzugt einen 1-3 Piezokomposit auf. Dabei handelt es sich um parallel ausgerichtete, senkrecht stehende Stäbchen aus einem PZT(Bleizirkonattitanat)-Material, die von einer Matrix aus Epoxidharz umgeben sind.

Weiterhin weist der erfindungsgemäße Ultraschallwandler ein Dämpfungselement auf. Das Piezoelement ist an seiner Rückseite, sowie an den Seiten in das Dämpfungselement eingebettet, wobei die schallabgebende Seite des Piezoelementes an der sich die Ankoppelschicht befindet, frei bleibt. Mit dem Dämpfungselement ist es möglich, die Abstrahlung von Ultraschall in eine unerwünschte Richtung zu vermeiden, bzw. die Abstrahlrichtung gezielt zu kontrollieren. Das Dämpfungselement wird beispielsweise aus einem Festkörper oder einer Vergussmasse gebildet. Geeignete Vergussmassen bestehen zum Beispiel aus Kunststoffen, wie Polyurethanen (PUR), oder aus Silikon.

Weiterhin umfasst die vorliegende Erfindung ein Verfahren zur Reduzierung der Amplitude von Nebenschwingungen des Ultraschallsignals eines erfindungsgemäßen Ultraschallwandlers.

Gemäß dem erfindungsgemäßen Verfahren wird die Dickenschwingung des Piezoelementes des erfindungsgemäßen Ultraschallwandlers durch ein Burstsignal angeregt, wobei ein Burstsignal aus 1-20 Schwingungen mit einer Frequenz von 50 kHz bis 1 MHz besteht.

Neben der Dickenschwingung kommt es auch zur Ausbildung von Querschwingungen des Piezoelementes. Diese Querschwingungen werden durch die Ankoppelschicht des erfindungsgemäßen Ultraschallwandlers verhindert, wodurch die Amplituden von Nebenschwingungen im erzeugten Ultraschallpuls deutlich reduziert werden. Dies führt zur Erzeugung eines Ultraschallpulses mit einer kürzeren Pulsdauer im Vergleich zu Ultraschallpulsen, die mit Ultraschallwandlern aus dem Stand der Technik erzeugt werden. Eine kürzere Pulsdauer ist gleichbedeutend mit einer größeren relativen Bandbreite des Ultraschallsignals.

Beispielsweise kann mit einem erfindungsgemäßen Ultraschallwandler, der eine typische Wandlerfrequenz von 230 kHz aufweist eine Pulsdauer zwischen 50 und 60 μs erreicht werden, die relative Bandbreite beträgt dann 40 %. Vergleichbare Ultraschallwandler aus dem Stand der Technik (Wandlerfrequenz ebenfalls 230 kHz) weisen eine Pulsdauer von 200 μs auf und eine relative Bandbreite von 10 %. Der erfindungsgemäße Ultraschallwandler ermöglicht deutlich kürzere Pulsdauern und dadurch auch eine deutlich vergrößerte relative Bandbreite des erzeugten Ultraschallpulses.

In einer weiteren bevorzugten Ausführungsform wird in dem erfindungsgemäßen Verfahren ein Ultraschallpuls erzeugt, der eine relative Bandbreite zwischen 10 % und 40 %, bevorzugt zwischen 20 % und 40 %, besonders bevorzugt zwischen 30 % und 40 % aufweist. Weiterhin umfasst die Erfindung die Verwendung des erfindungsgemäßen Ultraschallwandlers in der zerstörungsfreien Materialprüfung. Insbesondere ist es aufgrund des Luftultraschalls möglich, die Materialprüfung mit dem erfindungsgemäßen Ultraschallwandler und/oder dem erfindungsgemäßen Verfahren kontaktlos durchzuführen.

Insbesondere erden der erfindungsgemäße Ultraschallwandler und/oder das erfindungsgemäße Verfahren in der Materialprüfung verwendet, um Kompositverklebungen zu prüfen. Hier kann durch das erfindungsgemäße Verfahren eine Vielzahl von Fehlern detektiert werden. Dies sind beispielsweise Lufteinschlüsse, Delaminationen, Klebefehler, Verunreinigungen, Kanäle, Risse und/oder Kissing Bonds. Aufgrund der unterschiedlichen lateralen und axialen Ausdehnung der Fehler sowie unterschiedlichem Dämpfungsverhalten ist es notwendig, so breitbandig wie nur möglich zu messen. Die Anwendung der Luftultraschallprüfung in der Materialprüfung ist nur möglich, da durch das erfindungsgemäße Verfahren ein Ultraschallpuls zur Verfügung gestellt wird, der breitbandig genug ist, um die oben gestellte Messaufgabe zu erfüllen. Ultraschallpulse die mit Luftultraschallköpfen aus dem Stand der Technik erzeugt werden, sind für diese Messaufgaben auf Grund ihrer geringeren relativen Bandbreite nicht geeignet.

Im Folgenden wird die Erfindung anhand von 4 Ausführungsbeispielen und 4 Figuren näher erläutert.

**Figur 1** zeigt verschiedenen Ausführungsformen des erfindungsgemäßen Ultraschallwandlers im Querschnitt;

**Figur 2** zeigt eine Draufsicht auf die Ankoppelschicht des Ultraschallwandlers mit verschiedenen Strukturierungen;

**Figur 3** stellt einen Ultraschallpuls dar, der von einem Ultraschallwandler aus dem Stand der Technik erzeugt wurde;

**Figur 4** stellt einen Ultraschallpuls dar, der mit dem erfindungsgemäßen Ultraschallwandler erzeugt wurde.

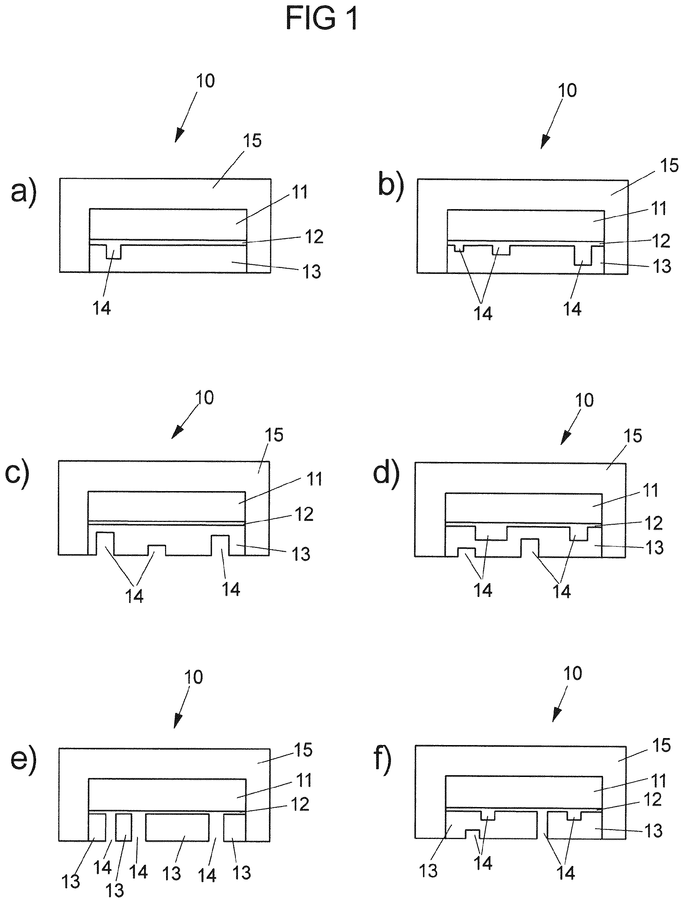

In **Figur 1a)** - **f)** ist der erfindungsgemäße Ultraschallwandler **10** in verschiedenen Ausführungen abgebildet. Der Ultraschallwandler weist in allen Ausführungsformen ein Dämpfungselement **15,** ein Piezoelement **11,** eine Klebeschicht **12** und eine Ankoppelschicht **13** auf. In Figur 1a) ist auf der Rückseite der Ankoppelschicht **13** eine Aussparung **14** eingebracht, während Figur 1b) eine Ankoppelschicht **13** mit drei Aussparungen **14** auf der Rückseite der Ankoppelschicht **13** darstellt. Die drei Aussparungen **14** reichen jeweils unterschiedlich tief in die Ankoppelschicht **13** hinein. Ebenso wäre es möglich, dass alle drei Aussparungen **14** die gleiche Eindringtiefe aufweisen. Figur 1c) zeigt einen Ultraschallwandler **10** mit einer Ankoppelschicht **13,** die drei Aussparungen **14** auf der Vorderseite aufweist, wobei die drei Aussparungen **14** unterschiedlich tief in die Ankoppelschicht **13** hineinreichen. Auch in diesem Fall wäre es erfindungsgemäß ebenfalls möglich, dass alle Aussparungen **14** die gleiche Eindringtiefe aufweisen.

Aussparungen **14** auf der Vorder- und auf der Rückseite der Ankoppelschicht **13,** weist der in Figur 1d) abgebildete Ultraschallwandler **10** auf, wobei die einzelnen Aussparungen **14** unterschiedlich tief in die Ankoppelschicht **13** hineinreichen. Figur 1e) zeigt einen Ultraschallwandler **10** mit drei Aussparungen **14,** die die Ankoppelschicht vollständig durchtrennen. Die Ankoppelschicht **13** wird durch die Aussparungen **14** in einzelne Elemente unterteilt.

Erfindungsgemäß kann die Strukturierung auch durch eine Kombination von Aussparungen **14** auf der Vorder- und auf der Rückseite der Ankoppelschicht **13** gebildet werden, die unterschiedlich tief in die Ankoppelschicht **13** hineinreichen, sowie durch Aussparungen **14,** die die Ankoppelschicht **13** komplett durchtrennen. Eine solche Ausführung ist in Figur 1f) dargestellt. Die Ankoppelschicht **13** weist zwei Aussparungen **14** an der Rückseite und eine Aussparung **14** an der Vorderseite auf, sowie eine Aussparung **14** die die Ankoppelschicht **13** komplett durchtrennt.

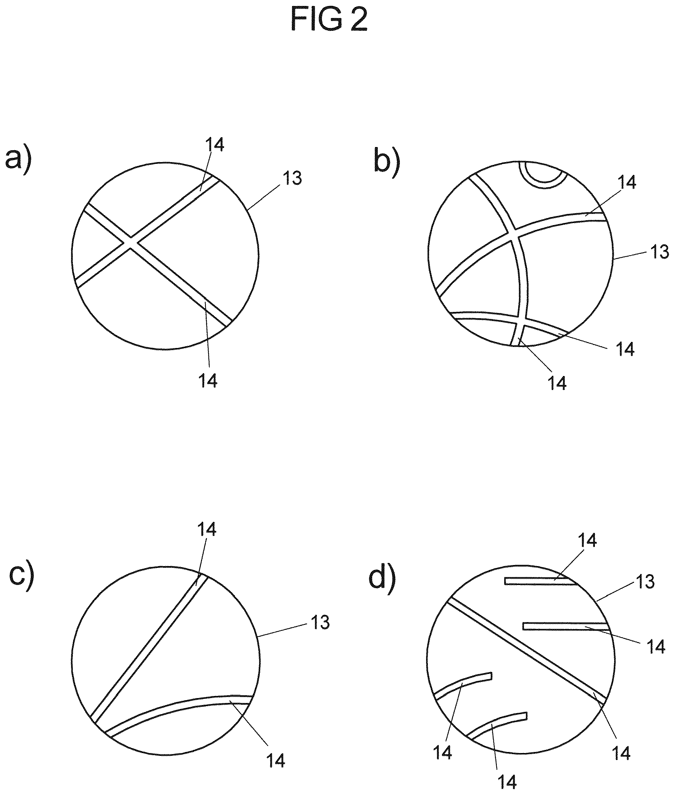

**Figur 2a)** - **d)** zeigt die Draufsicht auf eine Ankoppelschicht **13,** wobei der Verlauf der Aussparungen **14** zu sehen ist, durch die Strukturierung gebildet wird. Figur 2a) zeigt eine Ankoppelschicht **13** mit zwei linear verlaufenden Aussparungen **14.** In der Figur kreuzen sich die beiden Aussparungen **14,** dies ist erfindungsgemäß nicht zwingend notwendig. Figur 2b) zeigt eine Ankoppelschicht **13** deren Aussparungen **14** alle gekrümmt verlaufen, wobei alle Aussparungen am Rand der Ankoppelschicht **13** beginnen und enden. Eine Kombination aus gekrümmt verlaufenden Aussparungen **14** und linear verlaufenden Aussparungen **14** weist die Ankoppelschicht **13** in Figur 2c) auf.

Figur 2d) stellt eine Ankoppelschicht **13** dar, bei der die Strukturierung aus einer Vielzahl von Aussparungen **14** gebildet wird. Die Aussparungen **14** weisen teilweise einen linearen und teilweise einen gekrümmten Verlauf auf. Dabei beginnt und endet eine lineare Aussparung am Rand der Ankoppelschicht **13** während die andern Aussparungen **14,** die ebenfalls zur Strukturierung gehören am Rand der Ankoppelschicht **13** beginnen jedoch nicht durchgängig sind, sondern inmitten der Ankoppelschicht **13** enden. Die in den Figuren 2a) bis 2d) gezeigten Strukturierungen können sowohl auf der Vorderseite als auch auf der Rückseite der Ankoppelschicht **13** aufgebracht sein.

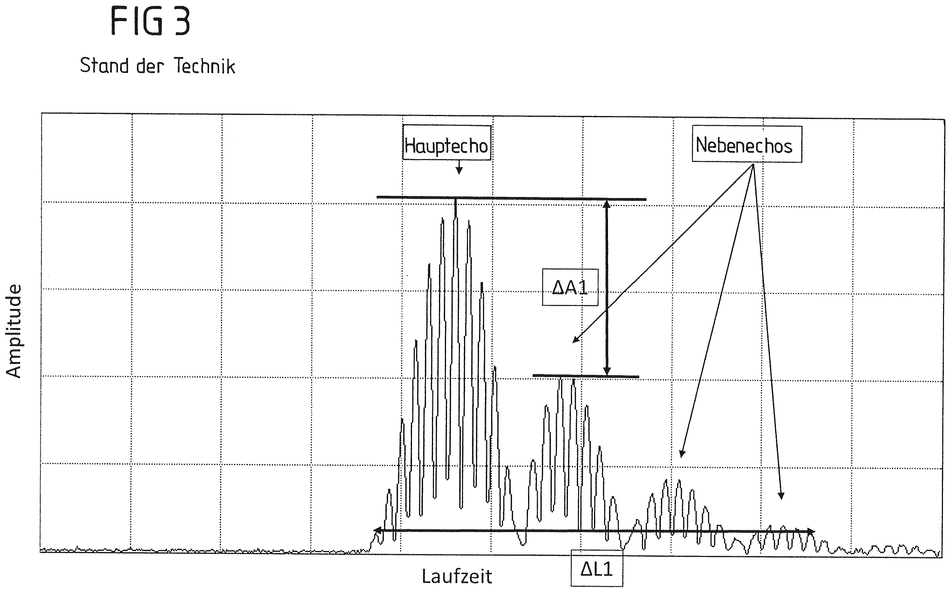

In **Figur 3** ist ein Ultraschallpuls dargestellt, der mit einem konventionellen Ultraschallwandler erzeugt wurde. Der konventionelle, aus dem Stand der Technik bekannte, Ultraschallwandler besteht aus einem Piezoelement, auf welchem eine λ/4-Schicht als Ankoppelschicht aufgebracht wurde. Beide Oberflächen, also Vorder- und Rückseite der Ankoppelschicht weisen keinerlei Strukturierung auf sondern zeigen eine planen Verlauf. Der Ultraschallwandler wird mit einem Burst Signal zur Dickenschwingung angeregt. Der abgegebene Ultraschallpuls wird aufgenommen und die Amplitude des abgegebenen Ultraschallpulses wird in Abhängigkeit von der Laufzeit in Figur 3 dargestellt. Deutlich zu sehen ist, dass der Ultraschallpuls neben einem Hauptecho drei gut erkennbare Nebenechos, die durch Nebenschwingungen gebildet werden, aufweist. Die Nebenechos werden durch die Querschwingungen des Piezoelementes verursacht. Die Nebenechos tragen zur Impulsbreite des Ultraschallpulses von ΔL1 bei. Die Differenz der Amplitude des Hauptechos und der Amplitude des ersten Nebenechos beträgt ΔA1. Deutlich zu erkennen ist, dass die Nebenechos die Impulsbreite des Ultraschallpulses deutlich verlängern.

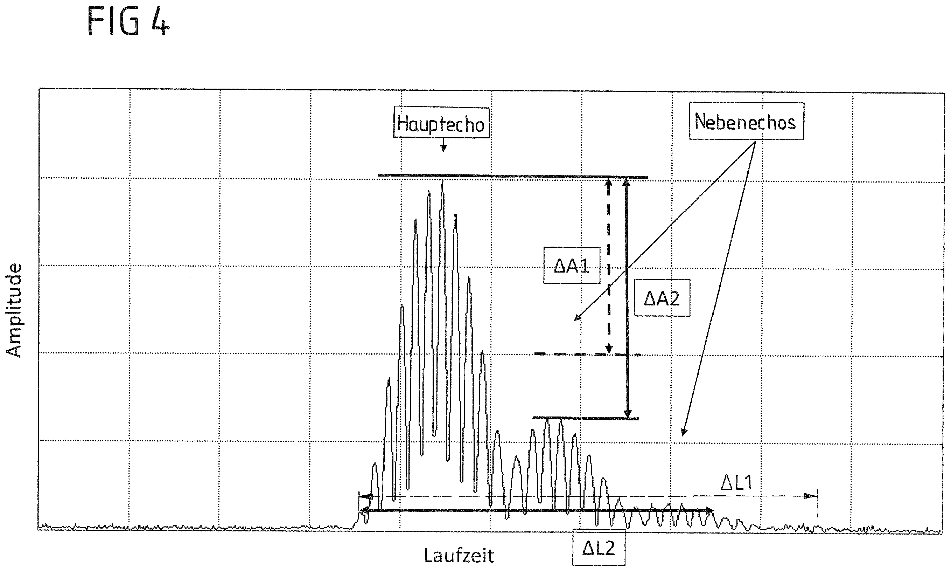

**Figur 4** zeigt die Amplitude eines Ultraschallpulses in Abhängigkeit von der Laufzeit, der mit einem erfindungsgemäßen Ultraschallwandler erzeugt wurde. Die Amplitude des Hauptechos ist im Vergleich zum Ultraschallpuls, der mit einem konventionellen Ultraschallwandler erzeugt wird (siehe Figur 3), unverändert. Deutlich zu sehen ist, dass die Amplitude der Nebenechos, die durch Nebenschwingungen gebildet werden, stark reduziert ist im Vergleich zum Ultraschallpuls eines konventionellen Ultraschallwandlers. Dies wird durch den Vergleich der Differenz der Amplitude des Hauptechos und des ersten Nebenechos ΔA2 des erfindungsgemäßen Ultraschallwandlers mit der Differenz der Amplitude des Hauptechos und des ersten Nebenechos ΔA1 eines konventionellen Ultraschallwandlers (Figur 3) deutlich. ΔA2 ist signifikant größer als ΔA1. Entsprechend zeichnen sich auch die folgenden Nebenechos durch eine geringere Amplitude aus. Vorteilhafterweise weist der Ultraschallpuls des erfindungsgemäßen Ultraschallwandlers lediglich zwei Nebenechos auf während der Ultraschallpuls eines konventionellen Ultraschallwandlers drei Nebenechos ausweist (Figur 3). Das dritte Nebenecho ist vollständig gedämpft. Dies führt dazu, dass die Impulsbreite des Ultraschallpulses ΔL2 des erfindungsgemäßen Ultraschallwandlers deutlich geringer ist als die Impulsbreite des Ultraschallpulses ΔL1, der mit einem konventionellen Ultraschallwandler erzeugt wurde. Damit weist der erfindungsgemäße Ultraschallwandler auch eine größere relative Bandbreite im Vergleich zum konventionellen Ultraschallwandler auf.

**Ausführungsbeispiele**

Ausführungsbeispiel 1

Ein erfindungsgemäßer Ultraschallwandler wird mit einem Burstsignal bestehend aus 5 Schwingen mit einer Frequenz von 230kHz zur Dickenschwingung angeregt. Auf dem Piezoelement ist eine Ankoppelschicht aufgebracht, die auf der Vorderseite mit linearen Aussparungen versehen ist, wobei alle Aussparungen bis zur Mitte der Ankoppelschicht reichen und mit Luft gefüllt sind. Der vom Ultraschallwandler abgegebene Ultraschallpuls hat eine Pulsdauer von ca. 100μs und weist eine relative Bandbreite von ca. 20% auf.

Ausführungsbeispiel 2

Ein erfindungsgemäßer Ultraschallwandler wird mit einem Burst Signal bestehend aus 5 Schwingungen mit einer Frequenz von 230kHz zur Dickenschwingung angeregt. Auf dem Piezoelement ist eine Ankoppelschicht aufgebracht, die auf der Rückseite mit linearen Aussparungen versehen ist, wobei alle Aussparungen unterschiedlich tief in die Ankoppelschicht reichen und mit Luft gefüllt sind. Der vom Ultraschallwandler abgegebene Ultraschallpuls hat eine Pulsdauer von ca. 100μs und weist eine relative Bandbreite von ca.20% auf.

Ausführungsbeispiel 3

Ein erfindungsgemäßer Ultraschallwandler wird mit einem Burst Signal bestehend aus 5 Schwingungen mit einer Frequenz von 230kHz zur Dickenschwingung angeregt. Auf dem Piezoelement ist eine Ankoppelschicht aufgebracht, wobei die Ankoppelschicht eine Strukturierung aufweist, die durch Aussparungen gebildet wird, die die Ankoppelschicht komplett durchtrennen und mit Luft gefüllt sind Der vom Ultraschallwandler abgegebene Ultraschallpuls hat eine Pulsdauer von ca. 80μs und weist eine relative Bandbreite von ca.30% auf.

Ausführungsbeispiel 4

Ein erfindungsgemäßer Ultraschallwandler wird mit einem Burst Signal bestehend aus 5 Schwingungen mit einer Frequenz von 230kHz zur Dickenschwingung angeregt. Auf dem Piezoelement ist eine Ankoppelschicht aufgebracht, die auf der Vorderseite mit linearen Aussparungen versehen ist, wobei alle Aussparungen bis zur Mitte der Ankoppelschicht reichen und mit NBR (Copolymer aus Butadien und Acrylnitril) gefüllt sind. Der vom Ultraschallwandler abgegebene Ultraschallpuls hat eine Pulsdauer von ca. 50$\mu$s und weist eine relative Bandbreite von ca. 40% auf.

**Bezugszeichenliste**

10    Ultraschallwandler
11    Piezoelement
12    Klebeschicht
13    Ankoppelschicht
14    Aussparungen
15    Dämpfungselement

**Patentansprüche**

1.  Ultraschallwandler (10) aufweisend ein Dämpfungselement (15), ein Piezoelement (11) und eine Ankoppelschicht (13), wobei die eine Ankoppelschicht (13) auf der schallabgebenden Seite des Piezoelementes (11) angebracht ist und die Ankoppelschicht (13) eine Strukturierung aufweist, wobei die Strukturierung durch ein oder mehrere Aussparungen (14) in der Ankoppelschicht (13) ausgebildet ist; mindestens eine Aussparung (14), die eine Strukturierung ausbildet, durchgängig durch die Oberfläche der Ankoppelschicht (13) verläuft, das heißt an einem Rand der Ankoppelschicht (13) beginnt und endet und ohne Unterbrechungen ausgebildet ist; die Strukturierung auf der Vorderseite und/oder auf der Rückseite der Ankoppelschicht (13) eingebracht ist; die Strukturierung eine vordefinierte Eindringtiefe in die Ankoppelschicht (13) aufweist und/oder die Ankoppelschicht (13) vollständig durchtrennt; und die Ankoppelschicht (13) durch die Strukturierung in mehrere Bereiche und/oder Elemente geteilt wird; **dadurch gekennzeichnet, dass** die Bereiche und/oder Elemente der Ankoppelschicht (13), die durch die Strukturierung gebildet werden, keine Symmetrie zueinander aufweisen.

2.  Ultraschallwandler (10) nach Anspruch 1, **dadurch gekennzeichnet, dass** die Strukturierung durch eine oder mehrere lineare Aussparungen (14) gebildet wird.

3.  Ultraschallwandler (10) nach Anspruch 1, **dadurch gekennzeichnet, dass** die Strukturierung durch eine oder mehrere gekrümmte Aussparungen (14) ge

bildet wird.

4.  Ultraschallwandler (10) nach einem der vorangegangenen Ansprüche, **dadurch gekennzeichnet, dass** sich mehrere Aussparungen (14) der Strukturierung an der Vorder- und/oder Rückseite der Ankoppelschicht (13) befinden und sich unterschiedlich tief in die Ankoppelschicht (13) erstrecken.

5.  Ultraschallwandler (10) nach einem der vorangegangenen Ansprüche, **dadurch gekennzeichnet, dass** die Aussparungen (14) der Ankoppelschicht (13), die durch die Strukturierung gebildet werden, senkrecht zur Oberfläche des Piezoelementes (11) verlaufen.

6.  Ultraschallwandler (10) nach einem der vorangegangenen Ansprüche, **dadurch gekennzeichnet, dass** die Ankoppelschicht (13) mehrere Ausspargen (14) mit unterschiedlicher Form aufweist.

7.  Ultraschallwandler (10) nach einem der vorangegangenen Ansprüche, **dadurch gekennzeichnet, dass** die Aussparungen (14) in der Ankoppelschicht (13) mit Luft oder einem Füllmaterial wie beispielsweise einem Kunststoff gefüllt ist.

8.  Ultraschallwandler (10) nach einem der vorangegangenen Ansprüche, **dadurch gekennzeichnet, dass** das Piezoelement (10) ein Piezokomposit oder eine Piezokeramik ist.

9.  Ultraschallwandler (10) nach Anspruch 8, **dadurch gekennzeichnet, dass** das Piezoelement (11) eine Piezokeramik ausgewählt aus der Gruppe enthaltend PZT (Bleizirkonattitanat), PMN (Bleimetaniobat) und BTO (Bariumtitanat) aufweist.

10. Ultraschallwandler (10) nach Anspruch 8, **dadurch gekennzeichnet, dass** das Piezoelement (11) einen Piezokomposit, insbesondere einen 1-3 Piezokomposit aufweist.

11. Ultraschallwandler (10) nach einem der vorangegangenen Ansprüche, **dadurch gekennzeichnet, dass** die Ankoppelschicht (13) eine $\lambda$/4-Schicht oder ein Vielfaches davon ist.

12. Ultraschallwandler (10) nach einem der vorangegangenen Ansprüche, **dadurch gekennzeichnet, dass** die mindestens eine Ankoppelschicht (13) ein Material mit einer Dichte geringer als 1 g/cm$^3$, bevorzugt geringer als 0,4 g/cm$^3$ aufweist.

13. Ultraschallwandler (10) nach einem der vorangegangenen Ansprüche, **dadurch gekennzeichnet, dass** die mindestens eine Ankoppelschicht (13) ein Material aus der Gruppe enthaltend Schäume, be

vorzugt syntaktische Schäume aufweist.

**14.** Ultraschallwandler (10) nach einem der vorangegangenen Ansprüche, **dadurch gekennzeichnet, dass** die eine Ankoppelschicht (13) mit dem einen Piezoelement (11) verklebt ist.

**15.** Verfahren zur Reduzierung der Amplitude von Ne-benschwingungen des Ultraschallsignals eines Ul-traschallwandlers (10) gemäß der Ansprüche 1 bis 14,
wobei die Dickenschwingung des Piezoelementes (11) durch ein Burstsignal angeregt wird; und die Strukturierung der Ankoppelschicht (13) Nachschwingungen des Piezoelementes (10) in Form von Querschwingungen verhindert und dadurch Neben-schwingungen des Ultraschallsignals reduziert wer-den.

**16.** Verwendung des Ultraschallwandlers (10) nach einem der Ansprüche 1 bis 14 in der zerstörungsfreien, insbesondere kontaktlosen Materialprüfung.

## Claims

**1.** Ultrasonic transducer (10) comprising a damping element (15), a piezoelectric element (11) and a coupling layer (13), wherein the one coupling layer (13) is provided on the sound emitting side of the piezoelectric element (11) and the coupling layer (13) comprises a structuring, wherein
the structuring is formed by one or more recesses (14) in the coupling layer (13);
at least one recess (14) forming a structuring extends continuously through the surface of the coupling layer (13), which means begins and ends at one edge of the coupling layer (13) and is formed without interruptions;
the structuring is provided on the front side and/or on the back side of the coupling layer (13); the structuring has a predefined penetration depth into the coupling layer (13) and/or completely intersects the coupling layer (13); and
the coupling layer (13) is divided into several regions and/or elements by the structuring; **characterized in that** the regions and/or elements of the coupling layer (13) formed by the structuring do not have any symmetry with respect to each other.

**2.** Ultrasonic transducer (10) according to claim 1, **characterized in that** the structuring is formed by one or more linear recesses (14).

**3.** Ultrasonic transducer (10) according to claim 1, **characterized in that** the structuring is formed by one or more curved recesses (14).

**4.** Ultrasonic transducer (10) according to one of the preceding claims, **characterized in that** a plurality of recesses (14) of the structuring are located at the front and/or back side of the coupling layer (13) and extend to different depths into the coupling layer (13).

**5.** Ultrasonic transducer (10) according to one of the preceding claims, **characterized in that** the recesses (14) of the coupling layer (13) formed by the structuring extend perpendicularly to the surface of the piezoelectric element (11).

**6.** Ultrasonic transducer (10) according to one of the preceding claims, **characterized in that** the coupling layer (13) has a plurality of recesses (14) with different shapes.

**7.** Ultrasonic transducer (10) according to one of the preceding claims, **characterized in that** the recesses (14) in the coupling layer (13) are filled with air or a filling material such as a plastic.

**8.** Ultrasonic transducer (10) according to any one of the preceding claims, **characterized in that** the piezoelectric element (10) is a piezocomposite or a piezoceramic.

**9.** Ultrasonic transducer (10) according to claim 8, **characterized in that** the piezoelectric element (11) comprises a piezoceramic selected from the group consisting of PZT (lead zirconate titanate), PMN (lead metaniobate) and BTO (barium titanate).

**10.** Ultrasonic transducer (10) according to claim 8, **characterized in that** the piezoelectric element (11) comprises a piezocomposite, in particular a 1-3 piezocomposite.

**11.** Ultrasonic transducer (10) according to any one of the preceding claims, **characterized in that** the coupling layer (13) is a $\lambda/4$ layer or a multiple thereof.

**12.** Ultrasonic transducer (10) according to any one of the preceding claims, **characterized in that** the at least one coupling layer (13) comprises a material having a density lower than 1 g/cm$^3$, preferably lower than 0.4 g/cm$^3$.

**13.** An ultrasonic transducer (10) according to any one of the preceding claims, **characterized in that** the at least one coupling layer (13) comprises a material selected from the group consisting of foams, preferably syntactic foams.

**14.** Ultrasonic transducer (10) according to any one of the preceding claims, **characterized in that** the one coupling layer (13) is bonded to the one piezoelectric element (11).

**15.** Method for reducing the amplitude of spurious oscillations of the ultrasonic signal of an ultrasonic transducer (10) according to claims 1 to 14, wherein the thickness vibration of the piezoelectric element (11) is excited by a burst signal; and the structuring of the coupling layer (13) prevents post-vibrations of the piezoelectric element (10) in the form of transverse vibrations, thereby reducing spurious vibrations of the ultrasonic signal.

**16.** Use of the ultrasonic transducer (10) according to any one of claims 1 to 14 in nondestructive, in particular contactless, material testing.

**Revendications**

**1.** Transducteur d'ultrasons (10) possédant un élément d'atténuation (15), un élément piézoélectrique (11) et une couche de couplage (13), la couche de couplage (13) étant appliquée sur le côté d'émission sonore de l'élément piézoélectrique (11) et la couche de couplage (13) présentant une structuration, la structuration étant formée par un ou plusieurs évidements (14) dans la couche de couplage (13) ; au moins un évidement (14), qui forme une structuration, suivant un tracé continu à travers la surface de la couche de couplage (13), ce qui veut dire qu'il commence et se termine au niveau d'un bord de la couche de couplage (13) et est configuré sans interruptions ; la structuration étant incorporée sur le côté avant et/ou sur le côté arrière de la couche de couplage (13) ; la structuration possédant une profondeur de pénétration prédéfinie dans la couche de couplage (13) et/ou traversant entièrement la couche de couplage (13) ; et la couche de couplage (13) étant divisée par la structuration en plusieurs zones et/ou éléments ; **caractérisé en ce que** les zones et/ou les éléments de la couche de couplage (13), qui sont formés par la structuration, ne présentent aucune symétrie entre eux.

**2.** Transducteur d'ultrasons (10) selon la revendication 1, **caractérisé en ce que** la structuration est formée par un ou plusieurs évidements (14) linéaires.

**3.** Transducteur d'ultrasons (10) selon la revendication 1, **caractérisé en ce que** la structuration est formée par un ou plusieurs évidements (14) courbes.

**4.** Transducteur d'ultrasons (10) selon l'une des revendications précédentes, **caractérisé en ce que** plusieurs évidements (14) de la structuration se trouvent sur le côté avant et/ou le côté arrière de la couche de couplage (13) et s'étendent à des profondeurs différentes dans la couche de couplage (13).

**5.** Transducteur d'ultrasons (10) selon l'une des revendications précédentes, **caractérisé en ce que** les évidements (14) de la couche de couplage (13), qui sont formés par la structuration, suivent un tracé perpendiculaire à la surface de l'élément piézoélectrique (11).

**6.** Transducteur d'ultrasons (10) selon l'une des revendications précédentes, **caractérisé en ce que** la couche de couplage (13) possède plusieurs évidements (14) ayant des formes différentes.

**7.** Transducteur d'ultrasons (10) selon l'une des revendications précédentes, **caractérisé en ce que** les évidements (14) dans la couche de couplage (13) sont remplis avec de l'air ou un matériau de remplissage, par exemple une matière plastique.

**8.** Transducteur d'ultrasons (10) selon l'une des revendications précédentes, **caractérisé en ce que** l'élément piézoélectrique (10) est un composite piézoélectrique ou une céramique piézoélectrique.

**9.** Transducteur d'ultrasons (10) selon la revendication 8, **caractérisé en ce que** l'élément piézoélectrique (11) présente une céramique piézoélectrique choisie dans le groupe contenant du PZT (titano-zirconate de plomb), le PMN (niobate de plomb et de magnésium) et le BTO (titanate de baryum).

**10.** Transducteur d'ultrasons (10) selon la revendication 8, **caractérisé en ce que** l'élément piézoélectrique (11) présente un composite piézoélectrique, notamment un composite piézoélectrique 1-3.

**11.** Transducteur d'ultrasons (10) selon l'une des revendications précédentes, **caractérisé en ce que** la couche de couplage (13) est une couche $\lambda/4$ ou un multiple de celle-ci.

**12.** Transducteur d'ultrasons (10) selon l'une des revendications précédentes, **caractérisé en ce que** l'au moins une couche de couplage (13) présente un matériau ayant une densité inférieure à 1 g/cm$^3$, de préférence inférieure à 0,4 g/cm$^3$.

**13.** Transducteur d'ultrasons (10) selon l'une des revendications précédentes, **caractérisé en ce que** l'au moins une couche de couplage (13) présente un matériau issu du groupe contenant des mousses, notamment des mousses syntactiques.

**14.** Transducteur d'ultrasons (10) selon l'une des revendications précédentes, **caractérisé en ce que** ladite une couche de couplage (13) est collée avec ledit élément piézoélectrique (11).

**15.** Procédé de réduction de l'amplitude des oscillations secondaires du signal ultrasonore d'un transducteur d'ultrasons (10) selon les revendications 1 à 14, l'oscillation en épaisseur de l'élément piézoélectrique (11) étant excitée par un signal en rafale ; et la structuration de la couche de couplage (13) empêchant les post-oscillations de l'élément piézoélectrique (10) sous la forme d'oscillations transversales et les oscillations secondaires du signal ultrasonore étant de ce fait réduites.

**16.** Utilisation du transducteur d'ultrasons (10) selon l'une des revendications 1 à 14 dans l'essai non destructif de matériel, notamment sans contact.

# FIG 1

a)

10

15
11
12
13
14

b)

10

15
11
12
13
14  14

c)

10

15
11
12
13
14  14

d)

10

15
11
12
13
14  14

e)

10

15
11
12
13  14  14  13  14  13
13

f)

10

15
11
12
13
13  14  14

# FIG 2

a)

b)

c)

d)

# FIG 3

Stand der Technik

FIG 4

Nebenechos

Hauptecho

$\Delta A2$

$\Delta A1$

$\Delta L1$

$\Delta L2$

Laufzeit

Amplitude

**IN DER BESCHREIBUNG AUFGEFÜHRTE DOKUMENTE**

**In der Beschreibung aufgeführte Patentdokumente**

- WO 9405004 A
- FR 2546306 A1